(19) Europäisches Patentamt / European Patent Office / Office européen des brevets

(11) **EP 4 586 484 A1**

(12) **EUROPEAN PATENT APPLICATION**
published in accordance with Art. 153(4) EPC

(43) Date of publication:
**16.07.2025 Bulletin 2025/29**

(21) Application number: 23861887.0

(22) Date of filing: 27.04.2023

(51) International Patent Classification (IPC):
$H02M\ 3/335^{(2006.01)}$  $H02M\ 7/219^{(2006.01)}$
$H02M\ 7/5387^{(2007.01)}$  $H02M\ 1/00^{(2006.01)}$

(52) Cooperative Patent Classification (CPC):
**H02M 1/00; H02M 1/088; H02M 3/335;
H02M 7/219; H02M 7/5387; Y02B 70/10**

(86) International application number:
**PCT/CN2023/091097**

(87) International publication number:
**WO 2024/051181 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.09.2022 CN 202211089489

(71) Applicant: **Sungrow Power Supply Co., Ltd.
Hefei, Anhui 230088 (CN)**

(72) Inventors:
• **WANG, Tengfei**
  **Hefei, Anhui 230088 (CN)**
• **ZHUANG, Jiacai**
  **Hefei, Anhui 230088 (CN)**
• **XU, Jiangtao**
  **Hefei, Anhui 230088 (CN)**
• **LIU, Wei**
  **Hefei, Anhui 230088 (CN)**
• **PAN, Daidong**
  **Hefei, Anhui 230088 (CN)**
• **XU, Jun**
  **Hefei, Anhui 230088 (CN)**

(74) Representative: **Zacco Norway AS
P.O. Box 488 Skøyen
0213 Oslo (NO)**

(54) **CONTROL METHOD AND CONTROL CIRCUIT FOR BIDIRECTIONAL RESONANT DIRECT-CURRENT CONVERTER**

(57) Provided in the present application are a control method and control circuit for a bidirectional resonant direct-current converter. According to the control method, after it is detected that a secondary-side resonant current is commutated, corresponding switch tubes in bridge arms of a secondary-side circuit are controlled to respectively delay for a corresponding period of time and then switch off. After the switch tubes are switched off, the current is commutated to anti-parallel diodes or body diodes of complementary switch tubes in the same bridge arms, and therefore, after a corresponding dead time elapses, the complementary switch tubes in the bridge arms of the secondary-side circuit are controlled to turn on, such that each switch tube in the secondary-side circuit has, only in the dead time, an operation condition where a drive is not turned on and thus the current flows reversely. In this way, the turn-on loss is reduced. Moreover, since each delay time is determined according to an input electrical parameter and/or an output electrical parameter of the bidirectional resonant direct-current converter and a required gain, the required gain can also be realized when a switching frequency is set to be greater than a resonant frequency. Therefore, a frequency adjustment range of a wide-voltage output occasion can be reduced, which has an obvious effect for improving the switching frequency.

EP 4 586 484 A1

Start

Obtain an input electrical parameter and/or an output electrical parameter    S101

Determine respective delay time periods of bridge arms in a secondary circuit based on the input electrical parameter and/or the output electrical parameter and a desired gain of a bidirectional resonant direct-current converter    S102

Determine a switching frequency of the primary circuit and the secondary circuit to be greater than a resonant frequency based on the input electrical parameter and/or the output electrical parameter and a preset reference signal    S103

Turn off, in response to a secondary resonant current reaching zero, corresponding switching transistors in the secondary circuit immediately after the respective delay time periods starting from a zero-crossing point; and turn on other switching transistors complementary to the turned-off switching transistors in the secondary circuit immediately after a dead time    S104

End

**FIG. 4**

## Description

The present application claims priority to Chinese Patent Application NO.202211089489.5, titled "CONTROL METHOD AND CONTROL CIRCUIT FOR BIDIRECTIONAL RESONANT DIRECT-CURRENT CONVERTER", filed on September 7, 2022 with the China National Intellectual Property Administration, which is incorporated herein by reference in its entirety.

## FIELD

The present disclosure relates to the technical field of power electronics, and in particular to a method and a circuit for controlling a bidirectional resonant direct-current converter.

## BACKGROUND

With the development of energy interconnection, energy exchange between different energy storage systems is widely applied, and bidirectional direct-current power conversion is gradually used for users and markets. An isolation system is generally provided between different energy systems, such as a bidirectional on-board power supply, or a bidirectional charging pile, in order to ensure safety. A commonly used bidirectional direct-current converter mostly adopts a DAB (dual active bridge) topology or a CLLC topology. In the DAB topology, gain and power are controlled through phase shifting, while a soft-switching range is limited, and the loss of the switching transistor is relatively large in a case of a battery voltage in a relatively wide range. The CLLC topology is a resonant topology, in which gain and power are controlled through frequency modulation, achieving a high efficiency.

For the conventional CLLC resonant converter, a switching transistor on a secondary side operates in a synchronous rectification state. The implementation of a wide voltage gain range is based on a large modulation range of a switching frequency. Moreover, with the development of devices, SiC (silicon carbide) devices and GaN (gallium nitride) devices are applied increasingly. In a case that current reversely flows through such device without drive, a conduction voltage of 3V or even a higher voltage is generated. Further, as the switching frequency increases, a proportion of a flowing duration of the reverse current in an entire switching cycle is increased, which produces a large conduction loss in a synchronous rectification situation, increasing the difficulty of heat dissipation for the device, resulting in a decrease of the system power.

Therefore, how to develop a solution for solving the above technical problems becomes an urgent demand.

## SUMMARY

A method and a circuit for controlling a bidirectional resonant direct-current converter are provided according to the present disclosure, to reduce a modulation range of the switching frequency while implementing a wide voltage gain range, and reduce the conduction loss.

In order to achieve the above objectives, following technical solutions are provided according to the present disclosure.

In a first aspect of the present disclosure, a method for controlling a bidirectional resonant direct-current converter is provided. The bidirectional resonant direct-current converter includes a transformer, a primary circuit, a secondary circuit and a resonant tank arranged between the transformer and the primary circuit and/or the secondary circuit. The primary circuit and the secondary circuit each are a single-phase full-bridge circuit. Switching transistors in the single-phase full-bridge circuit each are provided with an anti-parallel diode or a body diode. The method for controlling the bidirectional resonant direct-current converter includes:

obtaining an input electrical parameter and/or an output electrical parameter of the bidirectional resonant direct-current converter;

determining respective delay time periods of bridge arms in the secondary circuit based on the input electrical parameter and/or the output electrical parameter and a desired gain of the bidirectional resonant direct-current converter;

setting a switching frequency of the primary circuit and the secondary circuit to be greater than a resonant frequency of the resonant tank based on the input electrical parameter and/or the output electrical parameter and a preset reference signal; and

turning off, in response to a secondary resonant current of the bidirectional resonant direct-current converter reaching zero, corresponding switching transistors of the switching transistors in the secondary circuit immediately after the respective delay time periods starting from a zero-crossing point; and turning on other switching transistors complementary to the turned-off switching transistors in the secondary circuit immediately after a dead time.

In an embodiment, the respective delay time periods are equal to each other and less than a preset value, and the switching transistors in the bridge arms in the secondary circuit are turned on at a zero voltage; or, the respective delay time periods are unequal to each other in response to the desired gain of the bidirectional resonant direct-current converter being greater than 1.

In an embodiment, the respective delay time periods are unequal to each other, and one of the respective delay time periods is positively correlated with the desired gain of the bidirectional resonant direct-current converter.

In an embodiment, after the setting a switching frequency of the primary circuit and the secondary circuit to be greater than a resonant frequency of the resonant tank, the method further includes generating a driving control signal for the primary circuit based on the switching frequency, and outputting the driving control signal for the primary circuit.

In an embodiment, for each of the bridge arms in the single-phase full-bridge circuit, a switching transistor of one half-bridge arm in the bridge arm is complementary to a switching transistor of the other half-bridge arm in the bridge arm. Switching transistors of half-bridge arms at different positions in different bridge arms in the primary circuit are turned on or off simultaneously.

In an embodiment, the input electrical parameter and/or output electrical parameter includes at least one of an input current, an input voltage, an output current and an output voltage.

In a second aspect of the present disclosure, a circuit for controlling a bidirectional resonant direct-current converter is provided. The bidirectional resonant direct-current converter includes a transformer, a primary circuit, a secondary circuit and a resonant tank. The resonant tank is arranged between the transformer and the primary circuit and/or the secondary circuit. The primary circuit and the secondary circuit each are a single-phase full-bridge circuit. Switching transistors in the single-phase full-bridge circuit each are provided with an anti-parallel diode or a body diode. The circuit for controlling the bidirectional resonant direct-current converter includes a primary driving circuit, a secondary driving circuit, a zero-crossing detection circuit, a control module and an input sampling circuit and/or an output sampling circuit.

The input sampling circuit is configured to sample an input electrical parameter of the bidirectional resonant direct-current converter. The output sampling circuit is configured to sample an output electrical parameter of the bidirectional resonant direct-current converter.

The zero-crossing detection circuit is configured to detect whether a current flowing through the resonant tank reaches zero and generate a zero-crossing signal.

The control module is configured to receive the zero-crossing signal and the input electrical parameter and/or the output electrical parameter, perform the method for controlling the bidirectional resonant direct-current converter according to any one of the embodiments described in the first aspect, and turn on or off the switching transistors in the primary circuit through the primary driving circuit, and turn on or off the switching transistors in the secondary circuit through the secondary driving circuit.

In an embodiment, for detecting whether a current flowing through the resonant tank reaches zero, the zero-crossing detection circuit is configured to detect whether a secondary resonant current and/or a primary resonant current of the bidirectional resonant direct-current converter reaches zero.

In an embodiment, the input sampling circuit is configured to sample an input current and an input voltage at a direct-current side of the primary circuit. The output sampling circuit is configured to sample an output current and an output voltage at a direct-current side of the secondary circuit.

In an embodiment, the resonant tank includes at least one resonant inductor module and at least one resonant capacitor module. The at least one resonant inductor module and the at least one resonant capacitor module are individually arranged on a primary side and a secondary side of the transformer or are both arranged on one side of the transformer, in response to the at least one resonant inductor module and the at least one resonant capacitor module each being in a quantity of one. The at least one resonant inductor module is arranged on both the primary side and the secondary side of the transformer, in response to the at least one resonant inductor module being in a quantity of more than one. The at least one resonant capacitor module is arranged on both the primary side and the secondary side of the transformer, in response to the at least one resonant capacitor module being in a quantity of more than one

With the method for controlling the bidirectional resonant direct-current converter according to the present disclosure, upon detecting commutation of the secondary resonant current, each switching transistor in the secondary circuit is turned off immediately after a corresponding delay time period. After the switching transistor is turned off, the current commutates to an anti-parallel diode or a body diode of another switching transistor complementary to the switching transistor in the same bridge arm, and thus the complementary switching transistors in each bridge arm of the secondary circuit are turned on immediately after the dead time, so that the reverse current only flows within the dead time in which no switching transistor in the secondary circuit is turned on, greatly reducing the conduction loss. Moreover, the delay time period of each bridge arm of the secondary circuit is determined based on the input electrical parameter and/or the output electrical parameter and the desired gain of the bidirectional resonant direct-current converter. Therefore, the desired gain of the bidirectional resonant direct-current converter can further be implemented in a case that the switching frequency of the primary circuit and the secondary circuit is set to be greater than the resonant frequency of the resonant tank, thus reducing the frequency modulation range in a case of outputting a wide voltage and significantly increasing the switching frequency.

## BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.

FIG. 1 is a schematic structural diagram of a bidirectional resonant direct-current converter and a circuit for controlling the bidirectional resonant direct-current converter according to an embodiment of the present disclosure;

FIG. 2a is a schematic structural diagram of a resonant tank according to an embodiment of the present disclosure;

FIG. 2b is a schematic structural diagram of a resonant tank according to another embodiment of the present disclosure;

FIG. 2c is a schematic structural diagram of a resonant tank according to another embodiment of the present disclosure;

FIG. 2d is a schematic structural diagram of a resonant tank according to another embodiment of the present disclosure;

FIG. 2e is a schematic structural diagram of a resonant tank according to another embodiment of the present disclosure;

FIG. 3 is a schematic structural diagram of a circuit of a bidirectional resonant direct-current converter and a circuit for controlling the bidirectional resonant direct-current converter according to an embodiment of the present disclosure;

FIG. 4 is a flowchart of a method for controlling a bidirectional resonant direct-current converter according to an embodiment of the present disclosure; and

FIG. 5 is a waveform diagram illustrating some signals based on a method for controlling a bidirectional resonant direct-current converter according to an embodiment of the present disclosure.

## DETAILED DESCRIPTION

Technical solutions of embodiments of the present disclosure are clearly and completely described hereinafter in conjunction with the drawings of the embodiments of the present disclosure. Apparently, the embodiments described below are only some embodiments of the present disclosure, rather than all embodiments. Any other embodiments obtained by those skilled in the art based on the embodiments of the present disclosure without any creative work fall within the protection scope of the present disclosure.

In the present disclosure, the terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

A method for controlling a bidirectional resonant direct-current converter is provided according to the present disclosure, to reduce the modulation range of the switching frequency while implementing a wide voltage gain range, and reduce the conduction loss.

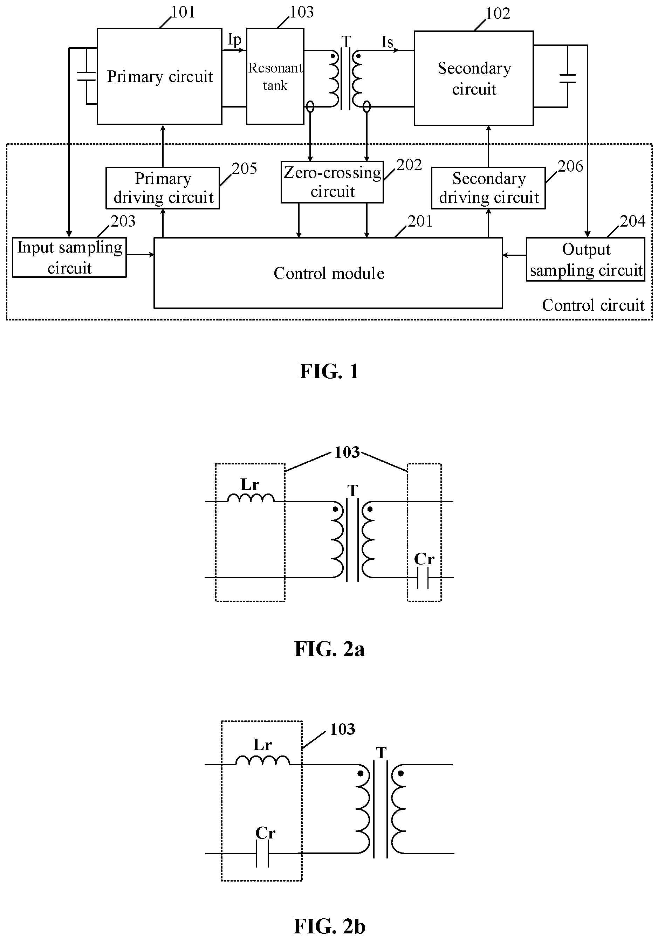

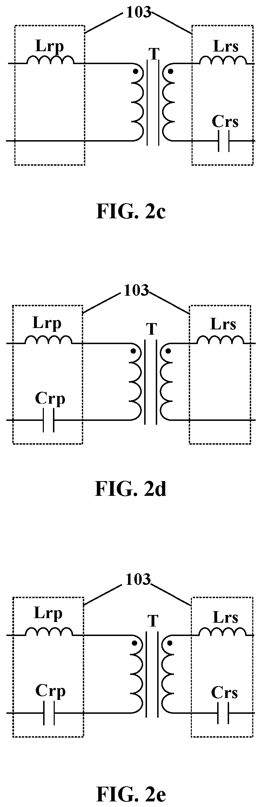

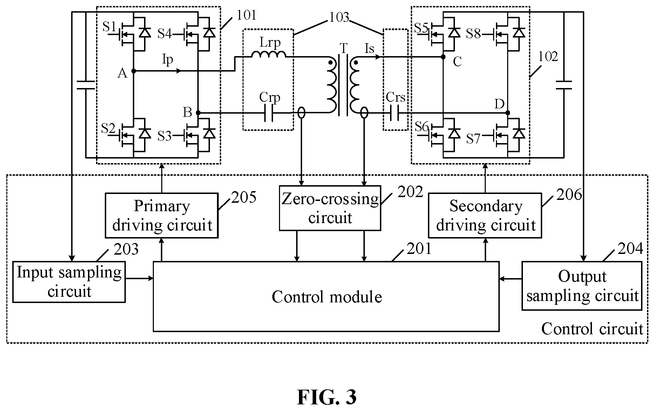

As shown in FIG. 1, the bidirectional resonant direct-current converter includes a transformer T, a primary circuit 101, a secondary circuit 102 and a resonant tank 103. The resonant tank 103 is arranged between the transformer T and the primary circuit 101 and/or the secondary circuit 102. FIG.1 exemplarily illustrates that the resonant tank 103 is arranged between the transformer T and the primary circuit 101. In practice, the resonant tank 103 is arranged between the transformer T and the secondary circuit 102. Alternatively, resonant elements in the resonant tank 103 are arranged on both sides of the transformer T. In an embodiment, the resonant tank 103 includes at least one resonant inductor module, and at least one resonant capacitor module. Moreover, in a case that the resonant inductor module Lr and the resonant capacitor module Cr each are in a quantity of one, the resonant inductor module Lr and the resonant capacitor module Cr are individually arranged on a primary side and a secondary side of the transformer T (as shown in FIG. 2a), or both are arranged on a same side of the transformer T (as shown in FIG. 2b). In a case that the resonant inductor modules is in a quantity of more than one, the resonant inductor modules (shown as Lrp and Lrs in FIG. 2c, FIG. 2d and FIG. 2e) are arranged on both the primary side and the secondary side of the transformer T. In a case that the resonant capacitor module is in a quantity of more than one, the resonant capacitor modules (shown as Crp and Crs as shown in FIG. 2e and FIG. 3) are arranged on both the primary side and secondary side of the transformer T. A situation that the resonant tank 103 includes two resonant capacitor modules Crp and Crs and one resonant inductor module Lrs that is arranged on the secondary side is not shown in figure. All implantations fall within the protection scope of the present disclosure. In addition, the primary circuit 101 and secondary circuit 102 each are a single-phase full-bridge circuit. As shown in FIG. 3, each switching transistor in the two single-phase full-bridge circuits is provided with an anti-parallel diode or a body diode. That is, the bidirectional resonant direct-current converter is implemented by a CLLC-type, LLC-type or SRC-type single-phase resonant converter in the conventional technology. Detailed structures and connection relationships of the bidirectional resonant direct-current converter may be referred to the conventional technology, and are not repeated herein.

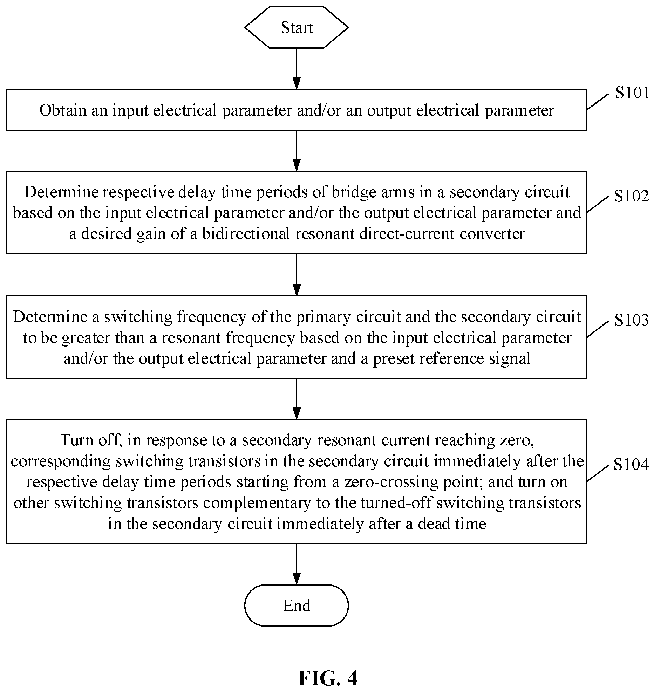

Regardless of the topology of the bidirectional resonant direct-current converter, the method for controlling the bidirectional resonant direct-current converter is shown in FIG. 4, and includes the following steps S101 to S104.

In step S101, an input electrical parameter and/or an output electrical parameter of the bidirectional resonant direct-current converter are obtained.

The input electrical parameter and/or output electrical parameters may include at least one of an input current, an input voltage, an output current and an output voltage of the bidirectional resonant direct-current converter. In practice, as shown in FIG. 1, the input current and the input voltage at the direct-current side of the primary circuit 101, that is, the input current and the input voltage of the bidirectional resonant direct-current converter, are sampled by an input sampling circuit 203, and the output current and the output voltage of the direct-current side of the secondary circuit 102, that is, the output current and the output voltage of the bidirectional resonant direct-current converter, are sampled by the output sampling circuit 204.

The input sampling circuit 203 and the output sampling circuit 204 transmit the sampled signals to a control module 201. The control module 201 may obtain the input current, the input voltage, the output current and the output voltage of the bidirectional resonant direct-current converter based on the sampled signals.

In step S102, a delay time period of each bridge arm in the secondary circuit is determined based on the input electrical parameter and/or output electrical parameter and a desired gain of the bidirectional resonant direct-current converter.

In practice, the control module 201 may determine the delay time periods dt1 and dt2 of the two rectifier bridge arms in the secondary circuit based on one or more signals of the input electrical parameters and/or output electrical parameters. In some embodiments, the two delay time periods dt1 and dt2 may be equal or unequal to each other, depending on the application environment. All implantations fall within the protection scope of the present disclosure.

In step S103, a switching frequency of the primary circuit and the secondary circuit is set to be greater than a resonant frequency of the resonant tank based on the input electrical parameter and/or the output electrical parameter and a preset reference signal.

In a case that the switching frequency of the primary circuit 101 and the secondary circuit 102 is less than the resonant frequency of the resonant tank 103, the gain of the bidirectional resonant direct-current converter is greater than 1. In a case that the switching frequency is greater than the resonant frequency, the gain of the bidirectional resonant direct-current converter is less than 1. The implementation of the wide voltage gain range is based on a relatively large modulation range of the switching frequency according to the conventional technology.

In this embodiment, the control module 201 shown in FIG. 1 sets the modulation range of the switching frequency to be greater than the resonant frequency based on the input electrical parameter and/or output electrical parameter and the internal preset reference signal through step S103, and determines the delay time periods dt1 and dt2 of the two bridge arms in the secondary circuit 102 through step S102. Therefore, the bidirectional resonant direct-current converter implements the desired gain, thus achieving the wide voltage gain range with a relatively small modulation range of the switching frequency.

In practice, an order of steps S102 and S103 is not limited, and the steps S102 and S103 may be performed sequentially or in parallel, depending on the application environment. All implementations fall within the protection scope of the present disclosure.

After the switching frequency is determined, the control module 201 may generate a driving control signal for the primary circuit 101 based on the switching frequency and output the driving control signal, and drive the primary circuit 101 through a primary driving circuit 205 in FIG. 1. In addition, the control module 201 may further generate a driving control signal for the secondary circuit 102 based on the switching frequency and two delay time periods dt1 and dt2, output the driving control signal, and drive the secondary circuit 102 through a secondary driving circuit 206 in FIG. 1. The process of the control module 201 controlling the secondary circuit 102 is implemented in step S104.

In step S104, in a case that the secondary resonant current of the bidirectional resonant direct-current converter reaches zero, corresponding switching transistors in the secondary circuit are turned off immediately after the respective delay time periods starting from a zero-crossing point; and other switching transistors complementary to the turned-off switching transistors in the secondary circuit are turned on immediately after a dead time.

In an embodiment, as shown in FIG. 1, the zero-crossing detection circuit 202 detects the primary resonant current Ip and/or the secondary resonant current Is of the bidirectional resonant direct-current converter, and the control module 201 determines whether the secondary resonant current Is reaches zero based on the currents detected by the zero-crossing detection circuit 202. In practice, if the transformer T has large magnetic inductance, a zero-crossing point of the primary resonant current Ip is slightly different from a zero-crossing point of the secondary resonant current Is. In this case, only one side of the transformer T is provided with a detection circuit for zero-crossing detection, to save costs. In an embodiment, the zero-crossing detection is only performed on the secondary resonant current Is.

Different from the synchronous rectification control of the secondary circuit in the conventional technology, for the above resonant direct-current converters with various topologies, in the embodiment, as long as the secondary resonant current reaches zero, a turn-off start time instant of the switching transistor to be turned off in the secondary circuit is determined as a time instant when the delay time period starting from the zero-crossing point expires, and other switching transistors complementary to the switching transistors to be turned off are turned on immediately after the dead time starting from the turn-off start time instant.

FIG. 3 exemplarily illustrates a CLLC-type single-phase resonant converter. The primary circuit 101 and the secondary circuit 102 are single-phase full-bridge circuits. In the two single-phase full-bridge circuits, for each of the bridge arms in the single-phase full-bridge circuits, a switching transistor of one half-bridge arm in the bridge arm is complementary to a switching transistor of the other half-bridge arm in the bridge arm. Moreover, in the primary circuit 101, switching transistors of half-bridge arms at different positions in different bridge arms are turned on or off simultaneously. In an embodiment, the primary circuit 101 includes a first bridge arm and a second bridge arm connected in parallel. The first bridge arm is formed by a first switching transistor S1 and a second switching transistor S2 connected in series, and drives of the two switching transistors are complementary to each other and are equal to 50%. The second bridge arm is formed by a third switching transistor S3 and a fourth switching transistor S4 connected in series, and drives of the two switching transistors are complementary to each other and are equal to 50%. In addition, a drive signal of the first switching transistor S1 is the same as a drive signal of the third switching transistor S3. A first node A is between the first switching transistor S1 and the second switching transistor S2, and a second node B is between the third switching transistor S3 and the fourth switching transistor S4. Resonant elements (Lrp and Crp) on the primary side and a primary winding of the transformer T are connected between the two nodes. The secondary circuit 102 includes a third bridge arm and a fourth bridge arm connected in parallel. The third bridge arm is formed by a fifth switching transistor S5 and a sixth switching transistor S6 connected in series, and drives of the two switching transistors are complementary to each other and are equal to 50%. The fourth bridge arm is formed by a seventh switching transistor S7 and an eighth switching transistor S8 connected in series, and drives of the two switching transistors are complementary to each other and are equal to 50%. A third node C is between the fifth switching transistor S5 and the sixth switching transistor S6, and a fourth node D is between the seventh switching transistor S7 and the eighth switching transistor S8. A resonant element (Crs) on the secondary side and a secondary winding of the transformer T are connected between the two nodes.

Upon detecting the zero-crossing point of the secondary resonant current, the zero-crossing detection circuit 202 generates a zero-crossing signal and transmits the zero-crossing signal to the control module 201. The control module 201 determines the zero-crossing point as a start point of the delay time periods. The secondary driving circuit 206 transmits the drive signal to the fourth bridge arm of the secondary circuit 102 immediately after the delay time period dt1 starting from the zero-crossing point, and transmits the drive signal to the third bridge arm of the secondary circuit 102 immediately after the delay time period dt2 starting from the zero-crossing point. The delay time periods dt1 and dt2 may be equal or unequal to each other.

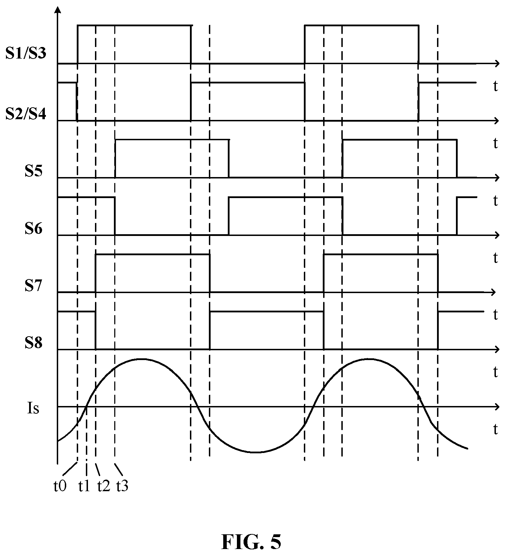

As shown in FIG. 5, the switching transistors of the two bridge arms in the primary circuit 101 are turned on or off at a time instant t0, and the secondary resonant current Is is detected as zero at a time instant t1. In the fourth bridge arm, the seventh switching transistor S7 is turned on and the eighth switching transistor S8 is turned off at a time instant t2 when the delay time period dt1 expires. In the third bridge arm, the fifth switching transistor S5 is turned on and the sixth switching transistor S6 is turned off at a time instant t3 when the delay time period dt2 expires, where t2-t1=dt1, and t3-t1=dt2.

The gain of the resonant tank 103 is less than 1 when the switching frequency is greater than the resonant frequency. In a case that a desired output gain of the bidirectional resonant direct-current converter is less than 1, the two delay time periods dt1 and dt2 may be equal to each other. The two delay time periods dt1 and dt2 each are less than a first preset value, thus achieving zero-voltage turn-on of the switching transistors in a corresponding bridge arm of the secondary circuit 102. In an embodiment, the first preset value is generally less than 1us, in order to achieve zero-voltage turn-on of the switching transistors in the corresponding bridge arm of the primary circuit 101 and reduce the turn-off loss of the respective switching transistors in the corresponding bridge arm of the secondary circuit 102. The first preset value is not limited, depending on the application environment.

In a case that the desired output gain of the bidirectional resonant direct-current converter is greater than 1, the two delay time periods dt1 and dt2 are unequal to each other. In an embodiment, the two delay time periods dt1 and dt2 are unequal to each other, and dt1<dt2. The delay time period dt2 of the third bridge arm is positively correlated with the desired gain of the bidirectional resonant direct-current converter. In practice, the delay time period dt2 is set to be less than 1/4 of a switching cycle to ensure that the desired gain of the bidirectional resonant direct-current converter increases monotonically with the increase of the delay time period dt2. The delay time period dt1 of the fourth bridge arm is less than a second preset value, that is, the delay time period dt1 is as small as possible on premise of achieving the soft switching of the fourth bridge arm. In an embodiment, the second preset value is generally less than 1us, in order to achieve zero-voltage turn-on of the switching transistors in the corresponding bridge arm of the primary circuit 101 and reduce the turn-off loss of the respective switching transistors in the corresponding bridge arm (i.e., the fourth bridge arm) of the secondary circuit 102. The second preset value is not limited, depending on the application environment.

It should be noted that in practice, the delay time period dt1 of the fourth bridge arm is set to be positively correlated with the desired gain of the bidirectional resonant direct-current converter, and the delay time period dt2 of the third bridge arm is set to be as small as possible on premise of achieving the soft switching the third bridge arm. That is, in a case that two delay time periods dt1 and dt2 are unequal to each other, only one of the delay time periods meets the gain requirement, and the other delay time period is used to achieve the soft switching of the corresponding bridge arm. The setting of the two delay time periods depends on the application environment. All implementations fall within the protection scope of the present disclosure.

It can be seen from FIG. 5 that the switching frequency is greater than the resonant frequency, and a resonant current phase lags behind a voltage phase. Therefore, when each switching transistor in the first bridge arm and the second bridge arm of the primary circuit 101 is turned on or off, the primary resonant current Ip does not reach zero (i.e., at the time instant t0). After the second switching transistor S2 is turned off, the primary resonant current Ip commutates from the second switching transistor S2 to the first switching transistor S1, i.e., the primary resonant current Ip flows through the first node A to another terminal of the first switching transistor S1. In this case, the first switching transistor S1 is turned on, thus achieving zero-voltage turn-on of the first switching transistor S1, i.e., achieving the soft switching. The soft switching of the other switching transistors in the primary circuit 101 is implemented in a same manner as the first switching transistor S1. For the secondary circuit 102, when the eighth switching transistor S8 is turned off and the seventh switching transistor S7 is turned on in the fourth bridge arm (at the time instant t2), the secondary resonant current Is has commutated at the time instant t1, and the secondary resonant current Is flows through a common terminal of the eighth switching transistor S8 and the fifth switching transistor S5 to the fourth node D. At the time instant t2, the eighth switching transistor S8 is turned off, and the secondary resonant current Is commutates to the seventh switching transistor S7, i.e., the secondary resonant current Is flows through another terminal of the seventh switching transistor S7 to the fourth node D, and the seventh switching transistor S7 is turned on, thus achieving zero-voltage turn-on of the seventh switching transistor S7, that is, achieving the soft switching. The soft switching of the eighth switching transistor S8 is implemented in a same manner as the seventh switching transistor S7. When switching transistors in the third bridge arm are turned on or off (at the time instant t3), the secondary resonant current Is is greater than the secondary resonant current Is at the time instant t2, and other conditions are the same as that of the fourth bridge arm, and thus achieves soft switching more easily.

It can be seen from the above analysis that for each of the switching transistors on the primary side or the secondary side, reverse current only flows within a dead time in which a switching transistor complementary to the switching transistor is turned off and the switching transistor is not turned on. Other time instants, there is always a turn-on switching transistor. Therefore, the reverse current flows within the dead time in which no switching transistor is turned on. In practice, a flowing duration of the reverse current is controlled by reasonably determining the dead time in which no switching transistor is turned on, thus reducing the reverse conduction voltage drop, and reducing a conduction loss.

With the method for controlling the bidirectional resonant direct-current converter according to the present disclosure, upon detecting commutation of the secondary resonant current, each switching transistor in the secondary circuit is turned off immediately after a corresponding delay time period. After the switching transistor is turned off, the current commutates to an anti-parallel diode or a body diode of another switching transistor complementary to the switching transistor in the same bridge arm, and thus the complementary switching transistor in each bridge arm of the secondary circuit are turned on immediately after the dead time, so that the reverse current only flows within the dead time in which no switching transistor in the secondary circuit is turned on, greatly reducing the conduction loss. Moreover, the delay time period of each bridge arm of the secondary circuit is determined based on the input electrical parameter and/or the output electrical parameter and the desired gain of the bidirectional resonant direct-current converter. Therefore, the desired gain of the bidirectional resonant direct-current converter can further be implemented in a case that the switching frequency of the primary circuit and the secondary circuit is set to be greater than the resonant frequency of the resonant tank, thus reducing the frequency modulation range in a case of outputting a wide voltage, and significantly increasing the switching frequency. In addition, the bidirectional resonant direct-current converter can achieve soft switching, effectively reduce the switching loss and further increase the switching frequency and improve system efficiency.

It should be noted that the method for controlling the bidirectional resonant direct-current converter described above is used for a situation where the bidirectional resonant direct-current converter transmits power from the primary side to the secondary side. The method for a situation where the power is transmitted from the secondary side to the primary side is the same as that of situation where the power is transmitted from the primary side to the secondary side, which may be regarded as exchanging the names of the primary side and the secondary side. That is, the method is implemented under a condition that a power incoming side is referred to as the primary side and a power outgoing side is referred to as the secondary side. Such implementation is not described in detail here. All implementations fall within the protection scope of the present disclosure.

In another embodiment of the present disclosure, a circuit for controlling a bidirectional resonant direct-current converter is provided. As shown in FIG. 1 and FIG. 3, the bidirectional resonant direct-current converter includes a transformer T, a primary circuit 101, a secondary circuit 102 and a resonant tank 103. The resonant tank 103 is arranged between the transformer T and primary circuit 101 and/or secondary circuit 102. FIG. 1 exemplarily illustrates that the resonant tank 103 is arranged between the transformer T and the primary circuit 101. In practice, the resonant tank 103 is arranged between the transformer T and the secondary circuit 102. Alternatively, resonant elements in the resonant tank 103 are arranged on both sides of the transformer T.

In an embodiment, the resonant tank 103 includes at least one resonant inductor module, and at least one resonant capacitor module. Moreover, in a case that the resonant inductor module Lr and the resonant capacitor module Cr each are in a quantity of one, the resonant inductor module Lr and the resonant capacitor module Cr are individually arranged on a primary side and a secondary side of the transformer T (as shown in FIG. 2a), or both are arranged on a same side of the transformer T (as shown in FIG. 2b). In a case that the resonant inductor modules is in a quantity of more than one, the resonant inductor modules (shown as Lrp and Lrs in FIG. 2c, FIG. 2d and FIG. 2e) are arranged on both the primary side and the secondary side of the transformer T. In a case that the resonant capacitor module is in a quantity of more than one, the resonant capacitor modules (shown as Crp and Crs as shown in FIG. 2e and FIG. 3) are arranged on both the primary side and secondary side of the transformer T. A situation that the resonant tank 103 includes two resonant capacitor modules Crp and Crs and one resonant inductor module Lrs that is arranged on the secondary side is not shown in figure. All implantations fall within the protection scope of the present disclosure. In practice, the numbers and locations of the resonant inductor module and the resonant capacitor module modified as needs. Moreover, the resonant inductor module is generally implemented by one inductor, or is implemented by multiple inductors connected in series and or in parallel. The resonant capacitor module may be implemented by one capacitor, or may be implemented by multiple capacitors connected in series or in parallel, depending on an actual application environment. All implantations fall within the protection scope of the present disclosure. The situations shown in the FIG. 2b and FIG. 2e are taken as an example for illustration, the relationship between the respective parameters in the two structures are expressed as:

$$Lr = Lrp + (\frac{Np}{Ns})^2 Lrs, \quad Cr = \frac{(\frac{Ns}{Np})^2 Crs * Crp}{(\frac{Ns}{Np})^2 Crs + Crp}$$

, where Np represents the number of turns of the primary winding of the transformer T, and Ns represents the number of turns of the secondary winding of the transformer T.

$$fr = \frac{1}{2\pi\sqrt{Lr * Cr}}$$

The resonant frequency fr is calculated from .

Moreover, the primary circuit 101 and secondary circuit 102 each are a single-phase full-bridge circuit. As shown in FIG. 3, each switching transistor in the two single-phase full-bridge circuits is provided with an anti-parallel diode or a body diode.

That is, the bidirectional resonant direct-current converter is implemented by a CLLC-type, LLC-type or SRC-type single-phase resonant converter in the conventional technology. Detailed structures and connection relationships of the bidirectional resonant direct-current converter may be referred to the conventional technology, and are not repeated herein.

Regardless of the topology of the bidirectional resonant direct-current converter, as shown in FIG. 1 and FIG. 3, the circuit for controlling the bidirectional resonant direct-current converter includes a primary driving circuit 205, a secondary driving circuit 206, a zero-crossing detection circuit 202, a control module 201, and an input sampling circuit 203 and/or an output sampling circuit 204 (FIG. 1 and FIG. 3 exemplarily illustrate that the circuit for controlling the bidirectional resonant direct-current converter includes both the input sampling circuit 203 and the output sampling circuit 204).

The input sampling circuit 203 is configured to sample an input electrical parameter of the bidirectional resonant direct-current converter. The output sampling circuit 204 is configured to sample an output electrical parameter of the bidirectional resonant direct-current converter. In an embodiment, the input sampling circuit 203 is arranged on the direct-current side of the primary circuit 101, and has an output terminal connected to an input terminal of the control module 201. The input sampling circuit 203 is configured to sample an input current and an input voltage of the bidirectional resonant direct-current converter. The output sampling circuit 204 is arranged on the direct-current side of the secondary circuit 102, and has an output terminal connected to another input terminal of the control module 201. The output sampling circuit 204 is configured to sample the output current and an output voltage of the bidirectional resonant direct-current converter.

The zero-crossing detection circuit 202 is configured to detect whether a current flowing through the resonant tank 103 reaches zero, generates a zero-crossing signal in response to zero-crossing information indicating that the secondary resonant current Is of the bidirectional resonant direct-current converter reaches zero, and outputs the zero-crossing signal to the corresponding input terminal of the control module 201. The primary resonant current Ip reaching zero and the secondary resonant current Is reaching zero each indicate the secondary resonant current Is reaches zero. Therefore, the zero-crossing detection circuit 202 detects whether the current flowing through the resonant tank 103 by detecting whether the secondary resonant current Is and/or the primary resonant current Ip of the bidirectional resonant direct-current converter reaches zero. In practice, the zero-crossing detection circuit 202 determines a delay start point of each bridge arm in the secondary circuit 102 by detecting the zero-crossing information of the primary resonant current Ip and/or the secondary resonant current Is. If the transformer T has large magnetic inductance, a zero-crossing point of the primary resonant current is slightly different from a zero-crossing point of the secondary resonant current. In this case, only one side of the transformer T is provided with a detection circuit for zero-crossing detection, to save costs. In an embodiment, the zero-crossing detection is only performed on the secondary resonant current Is. In a case that the control module 201 performs the method for controlling the bidirectional resonant direct-current converter in the above embodiments, the switching frequency is greater than the resonant frequency under various output gain requirements, i.e., the bidirectional resonant direct-current converter operates in an above resonance state. The magnetic inductance of the transformer T is not involved in the operation, and thus may be relatively large, facilitating implementing the above zero-crossing detection by the zero-crossing detection circuit 202 at low cost.

The control module 201 is configured to receive the zero-crossing signal and the input electrical parameter and/or the output electrical parameter, perform the method for controlling the bidirectional resonant direct-current converter described according to any one of the embodiments, turn on or off the switching transistors in the primary circuit 101 through the primary driving circuit 205, and turn on or off the switching transistors in the secondary circuit 102 through the secondary driving circuit 206. The process and principle of the method may be referred to the above embodiments, and are not repeated herein.

In order to implement the method for controlling the bidirectional resonant direct-current converter, the operations of the respective modules in the circuit for controlling the bidirectional resonant direct-current converter are described as follows.

(1) The input sampling circuit 203 samples an input voltage and an input current of the bidirectional resonant direct-current converter, and the output sampling circuit 204 samples an output voltage and an output current of the bidirectional resonant direct-current converter, and sampled signals are transmitted to the control module 201, so that the control module 201 obtains the input electrical parameter and/or output electrical parameter.

(2) The control module 201 determines the respective delay time periods dt1 and dt2 of the two bridge arms of the secondary side based on one or more signals of the above input electrical parameter and/or the output electrical parameter.

(3) The control module 201 generates, based on the input electrical parameter and/or the output electrical parameter and the internal preset reference signal described above, the switching frequency of the primary circuit and secondary circuit, and each switching transistor of the primary circuit 101 operates at the switching frequency generated by the control module 201.

(4) The zero-crossing detection circuit 202 detects the primary resonant current Ip and/or the secondary resonant current Is. In an embodiment, the zero-crossing detection circuit 202 detects a secondary rectified current (that is, the secondary resonant current Is). Upon detecting that the secondary resonant current reaches zero, the zero-crossing detection circuit 202 outputs the zero-crossing signal to the control module 201, so that the control module 201 can determine that the secondary resonant current Is reaches zero, and obtains the zero-crossing point of the secondary resonant current Is.

(5) Upon receiving the zero-crossing signal, the control module 201 outputs a driving control signal for turning on or off the fourth bridge arm and the third bridge arm immediately after the respective delay time periods dt1 and dt2.

(6) The control module 201 generates a driving control signal for the primary circuit 101 and a driving control signal for the secondary circuit 102. The primary driving circuit 205 generates drive signals of the primary circuit 101 based on the driving control signal for the primary circuit 101, to control the operation of the respective switching transistors of the primary circuit 101. The secondary driving circuit 206 generates drive signals of the secondary circuit 102 based on the driving control signal for the secondary circuit 102, to control the operation of the respective switching transistors of the secondary circuit 102.

In the circuit for controlling the bidirectional resonant direct-current converter according to the embodiments, resonance zero-crossing detection is performed on the bidirectional resonant direct-current converter combining with delay time period control, achieving the soft switching of the switching transistors of the secondary side. Compared with the conventional synchronous rectification control technology, the circuit in the present disclosure effectively reduces the flowing duration of the reverse current without drive, achieving a significant efficiency advantage in synchronous rectification applications of SiC and GaN devices. In addition, the delay time period is controlled, changing the output voltage gain, thus reducing the frequency modulation range in a case of outputting a wide voltage, and significantly increasing the switching frequency.

The same or similar parts among the embodiments in this specification may be referred to each other, and each of the embodiments emphasizes differences from other embodiments. In particular, the system or system embodiment is substantially similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the embodiments without any creative effort.

Those skilled in the art may further realize that the units and algorithm steps of each embodiment described in conjunction with the embodiments disclosed herein can be implemented by electronic hardware, computer software, or a combination of both. In order to clearly illustrate the interchangeability of hardware and software, the composition and steps of each embodiment have been described in general terms of functionality in the above description. Whether these functions are performed in hardware or software depends on the specific application and design constraints of the technical solution. Those skilled in the art may implement the described functions in various manners for each specific application. Such implementations should not be considered to be beyond the scope of the present disclosure.

Based on the above description of the disclosed embodiments, the features described in the different embodiments in this specification may be replaced or combined with each other, so that those skilled in the art can implement or use the present disclosure. Various modifications to these embodiments are apparent to those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1.  A method for controlling a bidirectional resonant direct-current converter, wherein the bidirectional resonant direct-current converter comprises a transformer, a primary circuit, a secondary circuit and a resonant tank arranged between the transformer and the primary circuit and/or the secondary circuit; the primary circuit and the secondary circuit each are a single-phase full-bridge circuit; and switching transistors in the single-phase full-bridge circuit each are provided with an anti-parallel diode or a body diode, wherein the method comprises:

    obtaining an input electrical parameter and/or an output electrical parameter of the bidirectional resonant direct-current converter;
    determining respective delay time periods of bridge arms in the secondary circuit based on the input electrical parameter and/or the output electrical parameter and a desired gain of the bidirectional resonant direct-current converter;
    determining a switching frequency of the primary circuit and the secondary circuit to be greater than a resonant frequency of the resonant tank based on the input electrical parameter and/or the output electrical parameter and a preset reference signal; and

turning off, in response to a secondary resonant current of the bidirectional resonant direct-current converter reaching zero, corresponding switching transistors of the switching transistors in the secondary circuit immediately after the respective delay time periods starting from a zero-crossing point; and turning on other switching transistors complementary to the turned-off switching transistors in the secondary circuit immediately after a dead time.

2. The method for controlling the bidirectional resonant direct-current converter according to claim 1, wherein

the respective delay time periods are equal to each other and less than a preset value, and the switching transistors in the bridge arms in the secondary circuit are turned on at a zero voltage; or
the respective delay time periods are unequal to each other in response to the desired gain of the bidirectional resonant direct-current converter being greater than 1.

3. The method for controlling the bidirectional resonant direct-current converter according to claim 2, wherein the respective delay time periods are unequal to each other, and one of the respective delay time periods is positively correlated with the desired gain of the bidirectional resonant direct-current converter.

4. The method for controlling the bidirectional resonant direct-current converter according to any one of claims 1 to 3, wherein after the setting a switching frequency of the primary circuit and the secondary circuit to be greater than a resonant frequency of the resonant tank, the method further comprises:
generating a driving control signal for the primary circuit based on the switching frequency, and outputting the driving control signal for the primary circuit.

5. The method for controlling the bidirectional resonant direct-current converter according to any one of claims 1 to 3, wherein

for each of the bridge arms in the single-phase full-bridge circuit, a switching transistor of one half-bridge arm in the bridge arm is complementary to a switching transistor of the other half-bridge arm in the bridge arm; and switching transistors of half-bridge arms at different positions in different bridge arms in the primary circuit are turned on or off simultaneously.

6. The method for controlling the bidirectional resonant direct-current converter according to any one of claims 1 to 3, wherein the input electrical parameter and/or output electrical parameter comprises at least one of an input current, an input voltage, an output current and an output voltage.

7. A circuit for controlling a bidirectional resonant direct-current converter, wherein the bidirectional resonant direct-current converter comprises a transformer, a primary circuit, a secondary circuit and a resonant tank arranged between the transformer and the primary circuit and/or the secondary circuit; the primary circuit and the secondary circuit each are a single-phase full-bridge circuit; and switching transistors in the single-phase full-bridge circuit each are provided with an anti-parallel diode or a body diode, wherein the circuit for controlling the bidirectional resonant direct-current converter comprises:

a primary driving circuit;
a secondary driving circuit;
a zero-crossing detection circuit;
a control module; and
an input sampling circuit and/or an output sampling circuit, wherein
the input sampling circuit is configured to sample an input electrical parameter of the bidirectional resonant direct-current converter;
the output sampling circuit is configured to sample an output electrical parameter of the bidirectional resonant direct-current converter;
the zero-crossing detection circuit is configured to detect whether a current flowing through the resonant tank reaches zero and generate a zero-crossing signal; and
the control module is configured to receive the zero-crossing signal and the input electrical parameter and/or the output electrical parameter, perform the method for controlling the bidirectional resonant direct-current converter according to any one of claims 1 to 6, and turn on or off the switching transistors in the primary circuit through the primary driving circuit, and turn on or off the switching transistors in the secondary circuit through the secondary driving circuit.

8. The circuit for controlling the bidirectional resonant direct-current converter according to claim 7, wherein for detecting whether a current flowing through the resonant tank reaches zero, the zero-crossing detection circuit is configured to: detect whether a secondary resonant current and/or a primary resonant current of the bidirectional resonant direct-current converter reaches zero.

9. The circuit for controlling the bidirectional resonant direct-current converter according to claim 7, wherein

the input sampling circuit is configured to sample an input current and an input voltage at a direct-current side of the primary circuit; and

the output sampling circuit is configured to sample an output current and an output voltage at a direct-current side of the secondary circuit.

10. The circuit for controlling the bidirectional resonant direct-current converter according to any one of claims 7 to 9, wherein the resonant tank comprises at least one resonant inductor module and at least one resonant capacitor module, wherein

the at least one resonant inductor module and the at least one resonant capacitor module are individually arranged on a primary side and a secondary side of the transformer or are both arranged on one side of the transformer, in response to the at least one resonant inductor module and the at least one resonant capacitor module each being in a quantity of one; and

the at least one resonant inductor module is arranged on both the primary side and the secondary side of the transformer, in response to the at least one resonant inductor module being in a quantity of more than one; and

the at least one resonant capacitor module is arranged on both the primary side and the secondary side of the transformer, in response to the at least one resonant capacitor module being in a quantity of more than one.

**FIG. 1**

**FIG. 2a**

**FIG. 2b**

103

Lrp          T          Lrs

Crs

**FIG. 2c**

103

Lrp          T          Lrs

Crp

**FIG. 2d**

103

Lrp          T          Lrs

Crp          Crs

**FIG. 2e**

**FIG. 3**

Start

Obtain an input electrical parameter and/or an output electrical parameter    S101

Determine respective delay time periods of bridge arms in a secondary circuit based on the input electrical parameter and/or the output electrical parameter and a desired gain of a bidirectional resonant direct-current converter    S102

Determine a switching frequency of the primary circuit and the secondary circuit to be greater than a resonant frequency based on the input electrical parameter and/or the output electrical parameter and a preset reference signal    S103

Turn off, in response to a secondary resonant current reaching zero, corresponding switching transistors in the secondary circuit immediately after the respective delay time periods starting from a zero-crossing point; and turn on other switching transistors complementary to the turned-off switching transistors in the secondary circuit immediately after a dead time    S104

End

**FIG. 4**

**FIG. 5**

## INTERNATIONAL SEARCH REPORT

| International application No. |
| --- |
| **PCT/CN2023/091097** |

**A.    CLASSIFICATION OF SUBJECT MATTER**

H02M 3/335(2006.01)i;   H02M 7/219(2006.01)i;   H02M7/5387(2007.01)i;   H02M1/00(2007.01)i

According to International Patent Classification (IPC) or to both national classification and IPC

**B.    FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXTC, DWPI, WPABS, ENTXT, CNKI, IEEE: 双向, 谐振, 变换, 转换, 变压器, 原边, 副边, 增益, 延迟, 延时, 开关频率, 谐振频率, 电流, 过零, 死区, bidirectional, resonance, converter, transformer, primary, secondary, gain, delay, switch, frequency, current, zero crossing, dead time

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115765467 A (SUNGROW POWER SUPPLY CO., LTD.) 07 March 2023 (2023-03-07) claims 1-10 | 1-10 |
| Y | CN 114430235 A (ZHEJIANG FUTECH SCIENCE AND TECHNOLOGY CO., LTD.) 03 May 2022 (2022-05-03) description, paragraphs 31-49, and figures 1-11 | 1-10 |
| Y | CN 114465491 A (SHANDONG UNIVERSITY) 10 May 2022 (2022-05-10) description, paragraphs 38-61, and figure 1 | 1-10 |
| A | CN 114583967 A (INSTITUTE OF ELECTRICAL ENGINEERING, CHINESE ACADEMY OF SCIENCES) 03 June 2022 (2022-06-03) entire document | 1-10 |
| A | JP 2003324956 A (ORIGIN ELECTRIC CO., LTD.) 14 November 2003 (2003-11-14) entire document | 1-10 |

☐ Further documents are listed in the continuation of Box C.         ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **30 June 2023** | **20 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091097**

| Patent document cited in search report | | | Publication date (day/month/year) | Patent family member(s) | | | Publication date (day/month/year) |
|---|---|---|---|---|---|---|---|
| CN | 115765467 | A | 07 March 2023 | None | | | |
| CN | 114430235 | A | 03 May 2022 | CN | 114430235 | B | 17 June 2022 |
| CN | 114465491 | A | 10 May 2022 | None | | | |
| CN | 114583967 | A | 03 June 2022 | None | | | |
| JP | 2003324956 | A | 14 November 2003 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211089489